# EUROPEAN PATENT SPECIFICATION

(11) **EP 3 339 076 B1**
(45) Date of publication and mention of the grant of the patent: **20.05.2020**
(21) Application number: 16838962.5
(22) Date of filing: 15.07.2016
(51) Int. Cl.: B60K 17/06, B60K 17/00, B62H 1/02, B62J 13/00, F16H 57/04

(54) **POWER UNIT FOR SADDLE-TYPE VEHICLE**
ANTRIEBSEINHEIT FÜR GRÄTSCHSITZFAHRZEUG
UNITÉ MOTRICE POUR VÉHICULE DE TYPE À ENFOURCHER

(30) Priority: 21.08.2015 JP 2015163764
(43) Date of publication of application: 27.06.2018
(73) Proprietor: Honda Motor Co., Ltd., Tokyo 107-8556 (JP)
(72) Inventor: KATAOKA, Keiko, Wako-shi Saitama 351-0193 (JP)
(74) Representative: Piésold, Alexander James
(86) International application number: PCT/JP2016/070969
(87) International publication number: WO 2017/033615

(56) References cited:
- WO-A1-2011/027445
- FR-A1- 2 741 398
- JP-A- 2007 106 382
- JP-A- 2011 031 887

## Description

### [Technical Field]

The present invention relates to a power unit of a saddle-type vehicle.

### [Background Art]

As a power unit mounted on a saddle-type vehicle, a power unit is known which has a transmission case internally housing a belt-type continuously variable transmission and joined to a crankcase that bears a crankshaft of an internal combustion engine and extends to lateral side of the rear wheel of the vehicle. A transmission case cover covers the lateral side of the transmission case with respect the vehicle-width direction.

A cooling wind is introduced through a cooling wind inlet formed at a front part of the transmission case to define a belt chamber for housing the belt-type continuously variable transmission of the power unit, whereby the belt-type continuously variable transmission is cooled.

The front part of the transmission case cover made of a metal, including the cooling wind inlet, is covered with a wind-guide duct cover, while the part other than the front part, not covered by the wind-guide duct cover, has a comparatively large surface area exposed to the outside, so that the transmission case cover is efficiently cooled by heat dissipation due to the exposure to the vehicle travel wind. This promotes cooling of the belt-type continuously variable transmission in the belt chamber by the cooling wind introduced through the cooling wind inlet into the belt chamber.

In the power unit of this kind of saddle-type vehicle, it is general that a main stand pivotally supported on a lower part of the crankcase is provided to swing between an erection position in which the main stand supports the vehicle body at the time of parking and a retraction position in which the main stand is made to lie along the lower surface of the transmission case at the time of traveling (for example, refer to WO 2011/027445 A1).

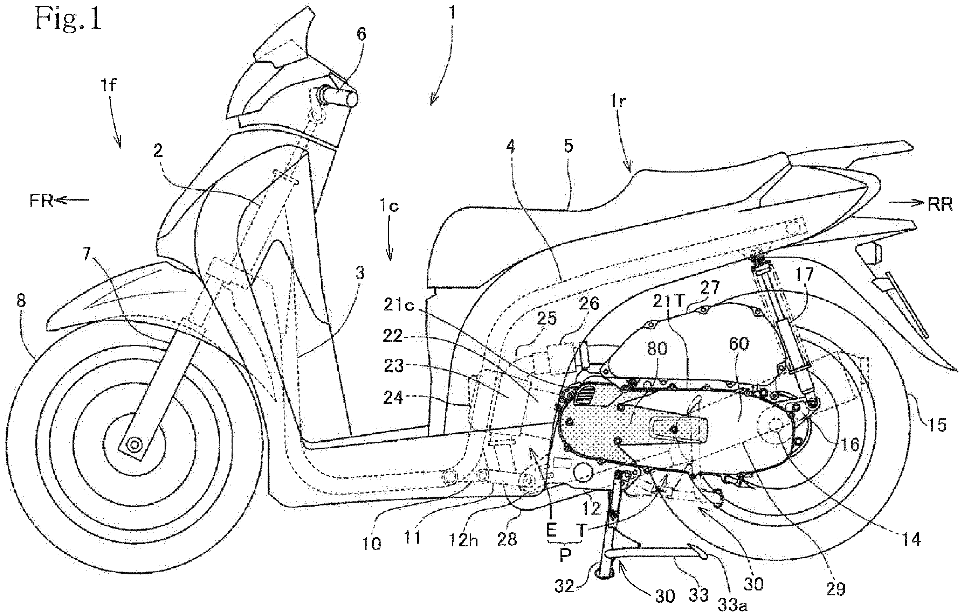

WO 2011/027445 A1 discloses a saddle-type vehicle in a state in which a main stand is erected and the vehicle body is supported thereby (see FIG. 1).

JP 2007 106382 A discloses a cover covering an outer side surface of a transmission case to form a ventilation path around the case.

### [Summary]

### [Technical Problem]

As disclosed also in WO 2011/027445 A1, the main stand has an operation arm protruding outward in a curved shape in vehicle width-direction from a leg part that erects to support the vehicle body.

The wind-guide duct cover covers only the front part of the transmission case cover. Thus, when the main stand swings from the erected state to the retracted state and the leg part is made to lie along the lower surface of the transmission case, the operation arm protruding from the leg part is caused to extend upward along the laterally outer side surface of the transmission case cover uncovered by the wind-guide duct cover and is exposed on the rear side, and a foot-rest part on the tip is positioned adjacent to the upper edge of the transmission case cover.

When erecting the main stand in the retracted state, the rider puts his or her foot on the foot-rest part on the tip of the operation arm extending upward along the laterally outer side surface of the transmission case cover and presses down the foot-rest part to erect the main stand.

The foot-rest part is located close to the laterally outer side of the transmission case cover in the vehicle-width direction. Therefore, the rider's foot tends to hit the exposed transmission case cover when the rider erects the main stand. If a painted surface of the transmission case cover made of a metal is scratched, there is a possibility that the scratch is conspicuous and impairs the appearance.

The present invention has been made in view of the foregoing problem and an object thereof is to provide a power unit of a saddle-type vehicle that can suppress scratching of a painted surface of the transmission case cover accompanying erection operation of the main stand while exposing the transmission case cover to sufficiently maintain a cooling effect for a belt chamber by the vehicle travel wind.

### [Solution to Problem]

To achieve the above-described object, according to the present invention, there is provided a power unit of a saddle-type vehicle as defined by the features of claim 1 including an internal combustion engine and a belt-type continuously variable transmission integrally configured and mounted on a saddle-type vehicle, the power unit comprising: a transmission case joined to a crankcase bearing a crankshaft, extending in a vehicle-width direction, of the internal combustion engine, the transmission case extending to a lateral side of a rear wheel of the vehicle; a transmission case cover made of a metal and covering a lateral side of the transmission case, with respect to the vehicle-width direction, to cooperate with the transmission case to define a belt chamber, the transmission case cover having an open cooling wind inlet formed at a front part thereof to introduce a cooling wind into the belt chamber; a wind-guide duct cover covering at least a front part including the cooling wind inlet of the transmission case cover from the lateral side with respect to the vehicle-width direction, in a manner to introduce external air into the cooling wind inlet; and a main stand pivotally supported by a lower part of the crankcase and swingable between an erection position at which the main stand erects to support the vehicle and a retraction position at which the main stand is made to lie along a lower surface of the transmission case, the main stand having an operation part extending transversely to the main stand and being adapted to be positioned on an outer lateral side of the transmission case cover with respect to the vehicle-width direction when the main stand is located at the retraction position, wherein at least a part of the transmission case cover is exposed to outside in side view; and the wind-guide duct cover has a duct cover rear part in a rear side thereof, the duct cover rear part extending rearward beyond a position of the operation part taken when the main stand is retracted.

According to this configuration, the duct cover rear part of the wind-guide duct cover is extended to a rearward position beyond the position of the operation part when the main stand is retracted. Therefore, the duct cover rear part is arranged to cover the transmission case cover in a region in which the rider's foot tends to hit when the rider puts the foot on the operation part of the main stand to erect the main stand. This can suppress scratching of the transmission case cover made of metal at the time of erection operation and keep the appearance good.

Furthermore, the wind-guide duct cover mainly covers at least the front part of the transmission case cover and the duct cover rear part partly covers the transmission case cover to a rearward area beyond the operation part of the main stand in its retraction state. Thus, the part that is not covered by the wind-guide duct cover in the transmission case cover can be exposed in a comparatively-large area. Thus, the transmission case cover can be efficiently cooled as a whole by heat dissipation due to the exposure of the exposed region of the transmission case cover made of metal to the vehicle running wind, and the effect of promoting cooling of the belt-type continuously variable transmission in the belt chamber by the cooling wind introduced through the cooling wind inlet into the belt chamber can also be maintained.

In the above-described configuration, the wind-guide duct cover including the duct cover rear part may be totally formed of a colored resin.

According to this configuration, the wind-guide duct cover is formed of a colored resin including the duct cover rear part disposed in the region against which the rider's foot tends to hit when the main stand is erected. Thus, even when the duct cover rear part is scratched by the rider's foot, the scratch can be made inconspicuous.

In the above-described configuration, the duct cover rear part may be disposed in such an area as to straddle, in an upward-downward direction, a virtual plane including both center axis lines of the crankshaft, as a front drive shaft, and a rear driven shaft between which a belt of the belt-type continuously variable transmission is stretched.

The vicinity of the virtual plane including both the center axis lines of the front drive shaft (crankshaft) and the rear driven shaft between which the belt of the belt-type continuously variable transmission is stretched in the transmission case cover is a region where the transmission case cover bulges outward in the vehicle-width direction to the largest extent and thus is a region against which the rider's foot tends to hit frequently. By disposing the duct cover rear part in such a region as to straddle the virtual plane in the upward-downward direction, the rider's foot hits against the exposed transmission case cover less readily, and scratching of the painted surface of the transmission case cover made of metal can be suppressed.

In the above-described configuration, the duct cover rear part may be located in an intermediate area between an upper edge and a lower edge of the transmission case cover in side view; and the transmission case cover may have a case cover exposed region uncovered by the wind-guide duct cover to be exposed to outside, and the case cover exposed region may include a rear exposed part on the rear side relative to the duct cover rear part, and upper and lower exposed parts formed to extend forward from the rear exposed part along upper and lower sides of the duct cover rear part.

According to this configuration, the exposed region of the transmission case cover uncovered by the wind-guide duct cover includes the rear exposed part and the upper and lower exposed parts formed to extend forward from the rear exposed part on the upper and lower sides of the duct cover rear part. Therefore, although the duct cover rear part exists on the wind-guide duct cover, a large surface area can be ensured as the surface area of the case cover exposed region that is not covered by the wind-guide duct cover. Thus, heat dissipation of the transmission case cover by the vehicle running wind can be efficiently carried out and an increased cooling effect for the belt-type continuously variable transmission can be expected.

In the above-described configuration, the transmission case cover may have a fitting recess part recessed inward in the vehicle-width direction to receive therein the duct cover rear part.

According to this configuration, the duct cover rear part located in the region bulging outward in the vehicle-width direction to the largest extent is fitted in the fitting recess part formed in the transmission case cover. This can suppress protrusion of the duct cover rear part to the outside in the vehicle-width direction and suppress also hitting of the rider's foot against the duct cover rear part.

In the above-described configuration, the duct cover rear part may have a duct cover rear recess part recessed inward in the vehicle-width direction in a region including the virtual plane.

According to this configuration, the rear cover side recess part that recesses inward in the vehicle-width direction is formed in the region including the virtual plane that bulges outward in the vehicle-width direction to the largest extent and against which the rider's foot tends to hit. Thus, hitting of the rider's foot against the duct cover rear part can also be suppressed.

In the above-described configuration, the duct cover rear part may be co-fastened to the transmission case together with the transmission case cover with a fastening bolt for fastening the transmission case cover to the transmission case.

According to this configuration, the duct cover rear part of the wind-guide duct cover is co-fastened to the transmission case together with the transmission case cover. Thus, the duct cover rear part can be stably fixed even when being elongated in the front-rear direction. In addition, the number of parts can be reduced because the wind-guide duct cover is co-fastened by the fastening bolt that fastens the transmission case cover to the transmission case.

In the above-described configuration, the transmission case cover may be formed with a fitting recess part recessed inward in the vehicle-width direction to receive therein the duct cover rear part; and the duct cover rear part may have a fastening seat face against which the fastening bolt is tightened, and the fastening seat face may be formed on a bottom surface of a bolt insertion recess part of the duct cover rear part, formed to be depressed inward in the vehicle-width direction onto a bottom surface of the fitting recess part of the transmission case cover.

According to this configuration, the fastening seat face, against which the fastening bolt is tightened in the duct cover rear part, is formed at the bottom surface of the bolt insertion recess part in the duct cover rear part. The duct cover rear part is formed to be depressed inward in the vehicle-width direction to the bottom surface of the fitting recess part of the transmission case cover. Thus, even when the duct cover rear part is co-fastened to the transmission case together with the transmission case cover, the co-fastening can be carried out by using the fastening bolt that can be of reduced length without protruding the fastening bolt outward in the vehicle-width direction.

In the above-described configuration, the wind-guide duct cover may have a duct cover front major part covering the front part of the transmission case cover, the duct cover rear part being formed to extend to the rear from the duct cover front major part.

According to this configuration, the wind-guide duct cover is formed with the extension of the duct cover rear part toward the rear side from the duct cover front major part covering the front part of the transmission case cover. Thus, the duct cover front major part and the duct cover rear part are formed integrally and continuously in the wind-guide duct cover. Thus, the number of parts is reduced and assembling work and so forth are made easy.

Furthermore, by co-fastening the duct cover rear part to the transmission case together with the transmission case cover, the wind-guide duct cover can be securely attached to the transmission case by a small number of fastening bolts.

In the above-described configuration, the wind-guide duct cover may include a duct cover front major part covering the front part of the transmission case cover, and the duct cover rear part may be separate from, and is disposed on the rear of the duct cover front major part.

According to this configuration, the duct cover front major part and the duct cover rear part of the wind-guide duct cover are divided into front and rear parts and the wind-guide duct cover is formed of separate members. Thus, a wide variety of appearance can be easily established based on the divided arrangement.

Furthermore, when the configuration in which the duct cover rear part is co-fastened to the transmission case together with the transmission case cover is employed, the front major part of the wind-guide duct cover can be removed without removing the fastening bolt with which the co-fastening is made. Thus, maintainability in performing maintenance or the like is good.

### [Advantageous Effects of Invention]

In the present invention, the duct cover rear part of the wind-guide duct cover is configured to extend to the rear-side position beyond the operation part when the main stand is retracted. Therefore, the duct cover rear part is disposed to cover the transmission case cover in a region against which the rider's foot tends to hit when the rider puts the foot on the operation part of the main stand to erect the main stand. This prevents the foot of the rider from hitting against the transmission case cover made of metal to an utmost degree, which can suppress scratching of the painted surface of the transmission case cover made of metal and maintains good appearance.

Furthermore, the wind-guide duct cover mainly covers at least the front part of the transmission case cover and the duct cover rear part partly covers the transmission case cover in the rear-side area beyond the operation part of the main stand in the retraction position. Due to this, the part that is uncovered by the wind-guide duct cover in the transmission case cover can be exposed in a comparatively large area. Thus, the transmission case cover can be effectively cooled as a whole by heat dissipation due to the exposure of the exposed region of the transmission case cover made of metal to the running wind, and the effect of promoting cooling of the belt-type continuously variable transmission in the belt chamber by the cooling wind introduced through the cooling wind inlet into the belt chamber can also be maintained.

### [Brief Description of the Drawings]

FIG. 1 is an overall left side view of a motorcycle including a power unit according to a first embodiment of the present invention;
FIG. 2 is a left side view of the power unit;
FIG. 3 is a sectional view taken along line III-III in FIG. 2;
FIG. 4 is a left side view of a V-belt-type continuously variable transmission of the power unit;
FIG. 5 is a sectional view taken along line V-V in FIG. 4;
FIG. 6 is a sectional view taken along line VI-VI in FIG. 4;
FIG. 7 is a sectional view taken along line VII-VII in FIG. 4;
FIG. 8 is a left side view of a transmission case cover;
FIG. 9 is a left side view of an inside duct member;
FIG. 10 is a left side view of a wind-guide duct cover;
FIG. 11 is a right side view of the wind-guide duct cover;
FIG. 12 is a left side view of a major part of a power unit of a first example according to a second embodiment;
FIG. 13 is a left side view of a major part of a power unit of a second modification example according to the second embodiment; and
FIG. 14 is a left side view of a major part of a power unit of a third modification example according to the second embodiment.

### [Description of Embodiments]

A first embodiment according to the present invention will be described below with reference to FIG. 1 to FIG. 11.

FIG. 1 is a side view of a two-wheel motorcycle 1 that is a saddle-type vehicle equipped with a power unit of the first embodiment to which the present invention is applied.

In the description of the present specification, the front, rear, left, and right directions are in accordance with the normal basis in which the straight forwarding direction of the motorcycle 1 equipped with the power unit according to the present embodiment is defined as the front side. In the drawings, FR denotes the front side, RR denotes the rear side, LH denotes the left side, and RH denotes the right side.

A vehicle body front portion 1f and a vehicle body rear portion 1r are joined with the intermediary of a low floor portion 1c, and a vehicle body frame that forms the framework of the vehicle body basically includes a down-tube 3 and main pipes 4.

Specifically, the down-tube 3 extends downward from a head pipe 2 of the vehicle body front portion 1f. This down-tube 3 bends to the horizontal direction at the lower end and extends rearward through the lower side of the floor portion 1c. At the rear end thereof, the pair of left and right main pipes 4 are joined thereto. The main pipes 4 rise upward from this joint part and bend to extend obliquely rearward.

A seat 5 is disposed above these main pipes 4.

Meanwhile, in the vehicle body front portion 1f, a handlebar 6 pivotally supported by the head pipe 2 is provided above the head pipe 2 and a front fork 7 extends downward and a front wheel 8 is pivotally supported by the lower end thereof.

A power unit P mounted on the motorcycle 1 is configured in such a manner that a V-belt-type continuously variable transmission T is extended rearward from an internal combustion engine E at the front part.

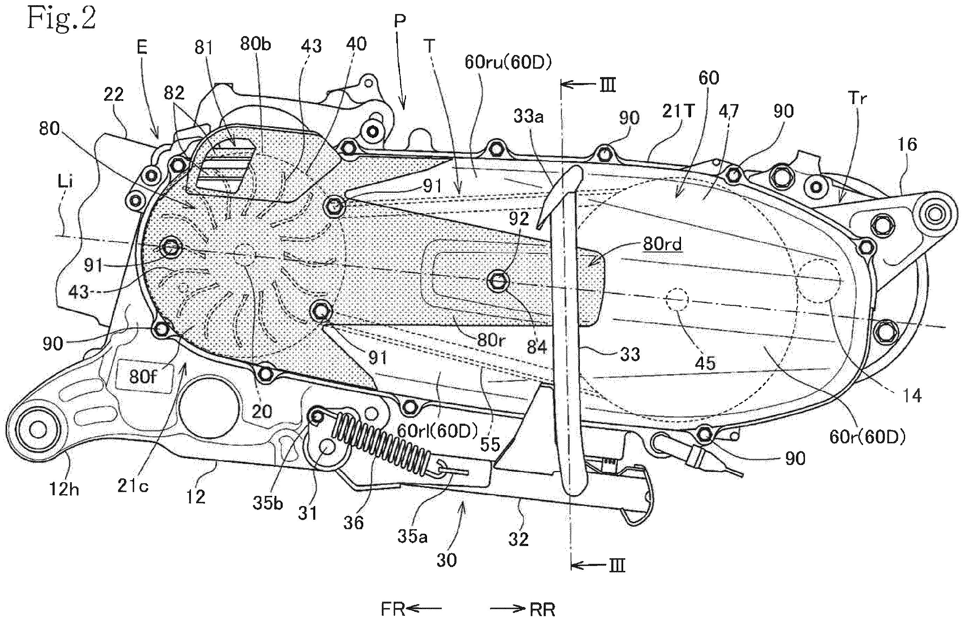

The internal combustion engine E is a single-cylinder, four-stroke internal combustion engine. A cylinder block 22, a cylinder head 23, and a cylinder head cover 24 protrude forward from a crankcase 21c that bears a crankshaft 20 (see FIG. 2) while orienting the crankshaft 20 in the vehicle width direction. The engine largely tilts forward to a state close to a substantially horizontal state.

A pair of left and right support brackets 12 extends downward from the lower end of the crankcase 21. In the support brackets 12, hanger brackets 12h protrude forward. These hanger brackets 12h are joined to brackets 10 protruded rearward from the front lower parts of the main pipes 4 with the intermediary of link members 11, and the power unit P is swingably joined and supported with respect to the vehicle body.

For the V-belt-type continuously variable transmission T extended rearward from the internal combustion engine E in the power unit P, a rear wheel 15 is provided around a rear axle 14 that is an output shaft of a reduction gear mechanism Tr (see FIG. 2) provided at the rear part of the V-belt-type continuously variable transmission T.

A rear cushion 17 is interposed between a support bracket 16, provided upright at the rear end of the V-belt-type continuously variable transmission T, and the rear part of the main pipe 4 (see FIG. 1).

An intake pipe 25 extends from the upper part of the cylinder head 23 greatly tilted forward in the internal combustion engine E and curves rearward to reach an air cleaner 27 above the V-belt-type continuously variable transmission T, via a throttle body 26.

Meanwhile, an exhaust pipe 28 that extends downward from the lower part of the cylinder head 23 is bent rearward and biased toward the right side to extend rearward and to be joined to a muffler 29 on the right side of the rear wheel 21.

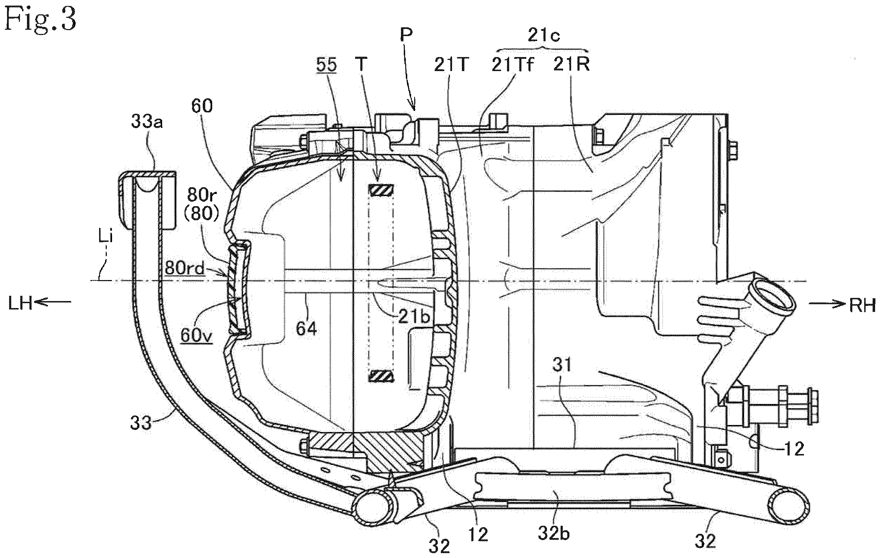

Referring to FIG. 2 and FIG. 3, a base end pivot shaft 31 of a main stand 30 is supported by the support brackets 12 extending from the lower end of the crankcase 21c, with the base end pivot shaft 31 oriented in the vehicle width direction.

In the main stand 30, a pair of left and right leg parts 32 extend from the base end pivot shaft 31 in such a manner as to spread from each other toward the end and the left and right leg parts 32 are joined by a joint bar 32b (see FIG. 3).

Furthermore, an operation arm 33 extends leftward from a region close to the tip end of the left leg part 32.

As depicted in FIG. 2, for the main stand 30, a spring 36 is interposed between a hooking piece 35a at the central part of the leg part 32 and a hooking pin 35b near the upper side of the base end pivot shaft 31 of the support bracket 12. The spring 36 allows keeping of both states of erecting and lying of the leg parts 32 of the main stand 30.

In FIG. 1, the erecting state of the main stand 30 is depicted by a solid line and the retracted state (lying state of the leg parts 32) is depicted by a two-dot-chain line. In FIGS. 2 and 3, the retracted state is depicted.

Specifically, the main stand 30 swings around the base end pivot shaft 31 and the leg parts 32 are erected as depicted in FIG. 1 to support the vehicle body. At the time of vehicle travel, the leg parts 32 are swung upward and are made to lie substantially horizontally along the lower surface of the V-belt-type continuously variable transmission T to be set to the retracted state.

As depicted in FIGS. 2 and 3, in the retracted state of the main stand 30, when the leg parts 32 are made to lie, the operation arm 33 extending leftward from the left leg part 32 is located to extend upward through a central part of the V-belt-type continuously variable transmission T with respect to the front-rear direction while curving from the lower surface of the transmission T along the left side surface thereof.

A foot-rest plate 33a is fixed to the tip of the operation arm 33.

The crankcase 21c that bears the crankshaft 20 while orienting the crankshaft 20 in the vehicle width direction is configured through left-right coalescence of a right crankcase portion 21R and a front part 21Tf of a transmission case 21T that is on the left side and is elongated in the front-rear direction (see FIG. 3).

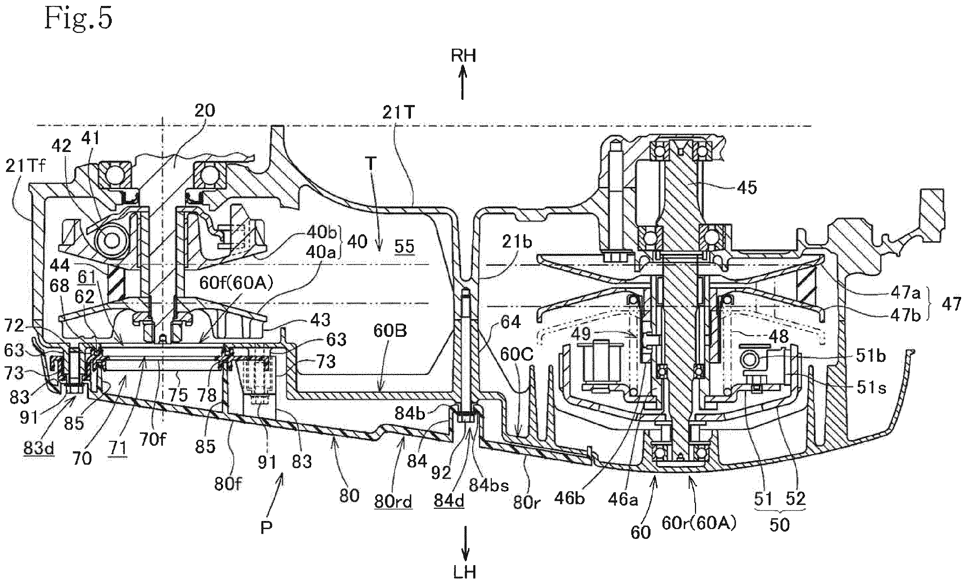

As depicted in FIG. 5, the transmission case 21T on the left side extends rearward from the front part 21Tf to a lateral side of the rear wheel 15.

In this transmission case 21T, the front part 21Tf coalesces with the right crankcase portion 21R to form the crankcase 21c. In addition, the transmission case 21T extends rearward from the front part 21Tf and forms an oval bowl shape that is opened leftward and is elongated in the front-rear direction. The transmission case 21T is covered by a transmission case cover 60 from the left side and a belt chamber 55 is formed inside. The V-belt-type continuously variable transmission T is housed in this belt chamber 55.

The power unit P is made up of an integral combination of the internal combustion engine E and the V-belt-type continuously variable transmission T.

As shown in FIG. 5, the front input drive shaft of the V-belt-type continuously variable transmission T is the crankshaft 20, and a drive pulley 40 is provided at an extension shaft part of the crankshaft 20 that protrudes from the transmission case 21T into the belt chamber 55.

The drive pulley 40 includes a fixed drive pulley half body 40a fitted to the left end at the extension shaft part of the crankshaft 20 and a movable drive pulley half body 40b that is opposed on the right side of the fixed drive pulley half body 40a and is pivotally supported slidably in the axial direction.

The fixed drive pulley half body 40a and the movable drive pulley half body 40b have opposed taper surfaces that are opposed to each other and sandwich a V-belt 44.

Plural centrifugal weights 42 are disposed in such a manner as to be movable in the radial directions and be sandwiched between the curved back surface at the back (right side) of the movable drive pulley half body 40b and a guide plate 41 that is supported by the extension shaft part of the crankshaft 20 and is fixed in contact with the journal part.

A number of blades of a cooling fan 43 are formed on the back surface (left surface) of the fixed drive pulley half body 40a.

The rear driven shaft on the rear side paired with the front drive shaft (crankshaft 20) on which the drive pulley 40 is supported is a reducer input shaft 45 of the reduction gear mechanism Tr. A fixed driven pulley half body 47a is fitted to an inner sleeve 46a supported by the reducer input shaft 45 relatively rotatably. On the left side of this fixed driven pulley half body 47a, a movable driven pulley half body 47b is fitted to an outer sleeve 46b supported externally on the inner sleeve 46a relatively movably. A driven pulley 47 is configured by such both driven pulley half bodies 47a and 47b.

The movable driven pulley half body 47b is biased by a spring 48 in such a direction as to come closer to the fixed driven pulley half body 47a, and a torque cam mechanism 49 is incorporated between the outer sleeve 46b integrated with the movable driven pulley half body 47b and the inner sleeve 46a.

The above-described V-belt 44 is sandwiched by both driven pulley half bodies 47a and 47b.

In the V-belt-type continuously variable transmission T, the V-belt 44 is wound around the drive pulley 40 and the driven pulley 47 to be stretched therebetween. When the engine rotational speed (rotational speed of the crankshaft 20) changes, the centrifugal weights 42 on the side of the drive pulley 40 move in the radial directions to move the movable drive pulley half body 40b in the axial direction and change the groove width between both the drive pulley half bodies 40a and 40b. Therefore, the diameter of the winding of the V-belt 44 around the drive pulley 40 is changed. Thereupon, the diameter of the winding around the driven pulley 47 is also changed naturally through the V-belt 44 with an endless shape, so that gear shift is carried out.

A centrifugal clutch 50 is provided at the left parts of the reducer input shaft 45 and the inner sleeve 46a. In the centrifugal clutch 50, a clutch outer member 52 that covers the outer circumference of a clutch inner member 51 fitted to the inner sleeve 46a is fitted to the reducer input shaft 45. On the clutch inner member 51, a clutch shoe 51s that swings in centrifugal direction against a spring 51b is provided opposed to the inner circumferential surface of the clutch outer member 52.

Therefore, when the rotational speed of the inner sleeve 46a increases, the clutch shoe 51s swings in the centrifugal direction against the spring 51b and contacts with the inner circumferential surface of the clutch outer member 52 to cause the centrifugal clutch 50 to connect, so that the power transmitted to the inner sleeve 46a via the V-belt 44 is transmitted to the reducer input shaft 45.

The left side of the transmission case 21T elongated in the front-rear direction is covered by the transmission case cover 60. In the belt chamber 55 formed between the transmission case 21T and the transmission case cover 60, the V-belt-type continuously variable transmission T is provided and the centrifugal clutch 50 is also housed.

The transmission case cover 60 is made of an aluminum alloy as a metal and paintwork is carried out on the surface.

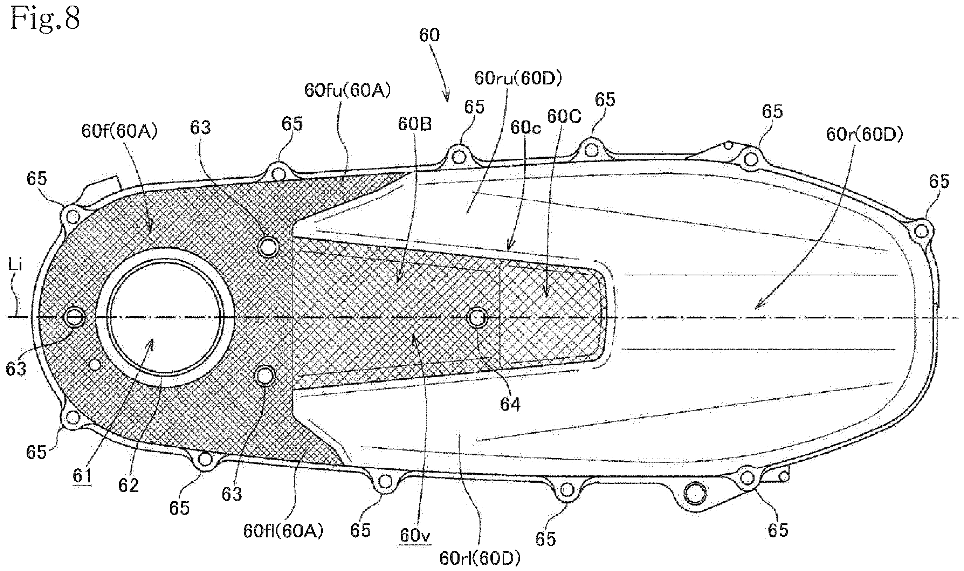

FIG. 8 shows a left side view of the transmission case cover 60. Referring to this FIG. 8 and FIG. 5, the transmission case cover 60 includes a case cover front part 60f that covers, from the left side, the cooling fan 43 formed on the fixed drive pulley half body 40a fitted to the left end of the crankshaft 20, which is the front drive shaft, and a case cover rear part 60r that covers, from the left side, the centrifugal clutch 50 provided at the left end of the reducer input shaft 45, which is the rear driven shaft. The transmission case cover 60 further includes a case cover central part 60c that joins the case cover front part 60f and the case cover rear part 60r. The transmission case cover 60 forms an oval shape elongated in the front-rear direction in side view.

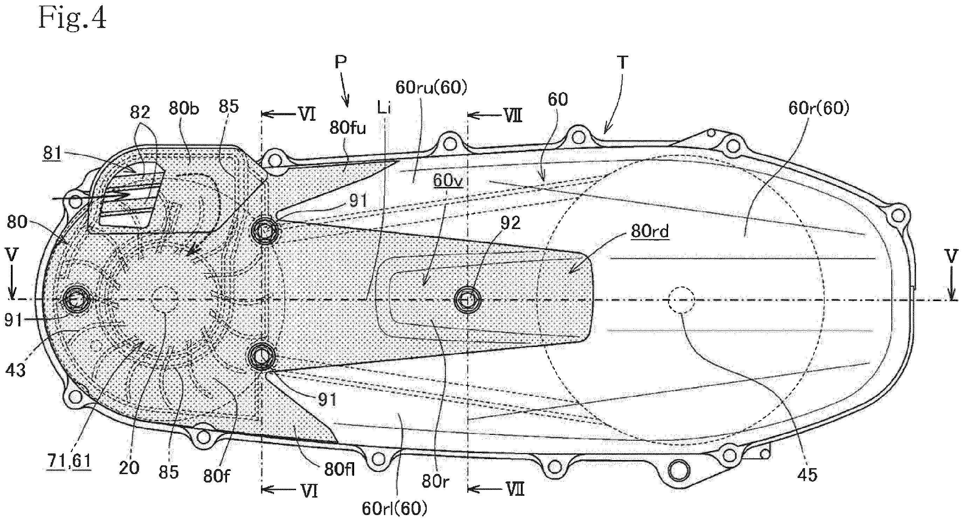

When a virtual plane Li including both center axis lines of the crankshaft (front drive shaft) 20 and the reducer input shaft (rear driven shaft) 45 in the V-belt-type continuously variable transmission 60 is assumed, FIG. 5, which is a sectional view along line V-V in FIG. 4, is a sectional view obtained by cutting the V-belt-type continuously variable transmission T by the virtual plane Li.

As depicted in FIG. 5, the drive pulley 40 on the front side and the driven pulley 47 on the rear side are located at the same position with respect to the vehicle width direction because the V-belt 44 is stretched therebetween. On the rear side, the centrifugal clutch 50 is located on the left side relative to the driven pulley 47.

For this reason, in the transmission case cover 60, the case cover rear part 60r covering the centrifugal clutch 50 bulges outward in the vehicle width direction relative to the case cover front part 60f covering the drive pulley 40 and the cooling fan 43 (see FIG. 5).

Referring to FIG. 8, the case cover front part 60f covering the drive pulley 40 from the left side in the transmission case cover 60 includes an upper edge extending part 60fu and a lower edge extending part 60fl that extend rearward from the upper and lower parts of the case cover front part 60f toward the case cover central part 60c along the upper and lower side edges of the case cover central part 60c. The case cover front part 60f and the upper and lower edge extending parts 60fu and 60fl form an innermost region 60A (part provided with the finest lattice hatch in FIG. 8) that is on the innermost side in the vehicle width direction.

In the case cover front part 60f, a large size cooling wind inlet 61 that introduces cooling wind into the belt chamber 55 is opened.

Meanwhile, the case cover rear part 60r covering the centrifugal clutch 50 from the left side in the transmission case cover 60 and upper and lower extending parts 60ru and 60rl that bifurcate forward from the case cover rear part 60r into upper and lower parts and extend toward the case cover central part 60c form an outermost region 60D (part that is not provided with a hatch in FIG. 8) that is on the left outermost side in the vehicle width direction.

As depicted in FIG. 8, the case cover central part 60c between the case cover front part 60f and the case cover rear part 60r in the transmission case cover 60 is fitted in such a manner that the upper and lower edge extending parts 60fu and 60fl of the innermost region 60A sandwich the front-end tapered parts of the upper and lower extending parts 60ru and 60rl of the outermost region 60D from the upper and lower sides.

Furthermore, a fitting recess part 60v that is inwardly concave in the vehicle width direction is formed between the upper extending part 60ru and the lower extending part 60rl that bifurcate forward from the case cover rear part 60r of the outermost region 60D.

The fitting recess part 60v formed between the upper extending part 60ru and the lower extending part 60rl is located at such a position as to straddle the virtual plane Li in the upward-downward direction and is formed into a tapered shape gradually decreasing in vertical width toward the rear side.

In the fitting recess part 60v, the recessing depth position (position in the vehicle width direction) of the recess part is different between front and rear parts thereof. More specifically, the depth positions in the vehicle width direction of a front recess region 60B (part provided with a coarser lattice hatch than the innermost region 60A in FIG. 8) on the front side and of a rear recess region 60C (part provided with a coarser lattice hatch than the front recess region 60B in FIG. 8) on the rear side are both located between the innermost region 60A and the outermost region 60D. The innermost region 60A, the front recess region 60B, the rear recess region 60C, and the outermost region 60D are located on the left outside in the vehicle width direction in that order from the inner side to the outer side (see FIG. 5).

The rear recess region 60C as the rear side of the fitting recess part 60v is located at the same position with respect to the front-rear direction as the operation arm 33 located on the left side of the V-belt-type continuously variable transmission T (see FIG. 2), in the retracted state of the above-described main stand 30 in which the leg parts 32 are made to lie.

Referring to FIGS. 5 and 8, on the left side surface of the case cover front part 60f of the transmission case cover 60, a rim projecting rib 62 forming a rim is provided to have a shape of a circular ring around the cooling wind inlet 61.

In the case cover front part 60f of the transmission case cover 60, three cylindrical attaching boss parts 63 are formed to protrude leftward (in the vehicle-width outward direction) around the large cooling wind inlet 61 at the center.

Of the three cylindrical attaching boss parts 63, one is formed on the front side of the cooling wind inlet 61 and the other two are formed on the obliquely upper and lower rear sides of the cooling wind inlet 61.

Screw holes are formed in the cylindrical attaching boss parts 63.

At the rear part of the front recess region 60B, a central cylindrical attaching boss part 64 is formed to protrude toward the inside in the vehicle-width direction (right side) (see FIGS. 5 and 8).

The central cylindrical attaching boss part 64 slightly protrudes to the outside in the vehicle-width direction (left side).

At the outer circumferential edge of the transmission case cover 60 that forms an oval shape in side view, plural attaching boss parts 65 are formed to join the transmission case cover 60 to the transmission case 21T.

A wind-guide duct cover 80 covers the innermost region 60A, the front recess region 60B, and the rear recess region 60C excluding the outermost region 60D in such a transmission case cover 60 from the outer lateral side in the vehicle width direction.

Therefore, as depicted in FIG. 4, only the outermost region 60D in the transmission case cover 60 is exposed to the outside when the wind-guide duct cover 80 (member provided with a scattered-dot pattern in the view) is put on the transmission case cover 60.

The case cover front part 60f including the cooling wind inlet 61 in the transmission case cover 60 is covered by the wind-guide duct cover 80 from the outside with the intermediary of an inside duct member 70 therebetween.

The inside duct member 70 and the wind-guide duct cover 80 are made of a resin.

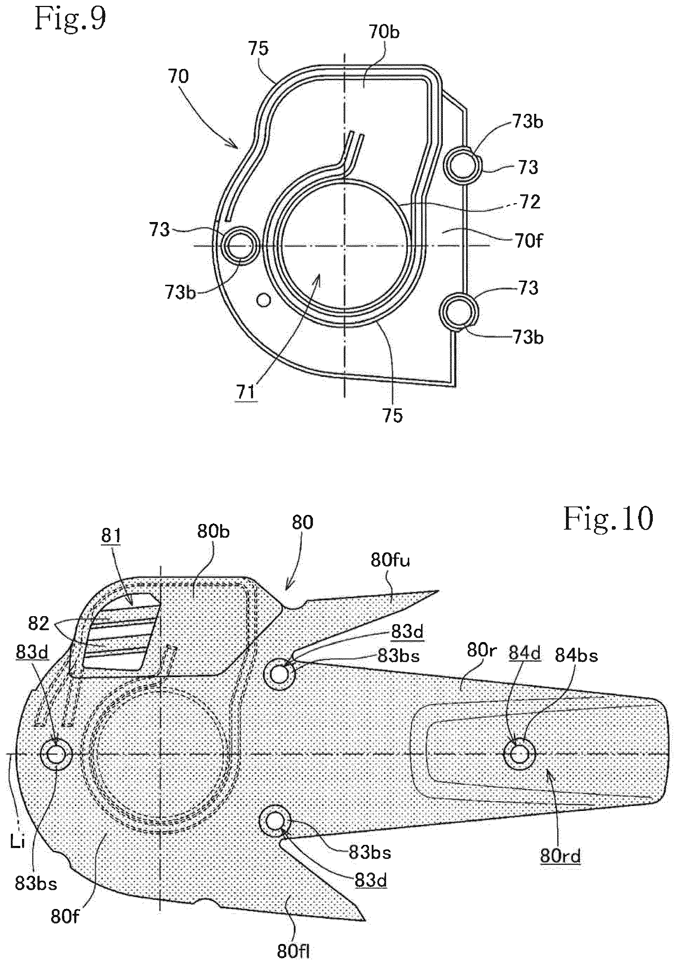

As depicted in FIG. 9, the inside duct member 70 includes a case-cover-opposed part 70f opposed to the case cover front part 60f of the transmission case cover 60 in side view, and an upward-bulging part 70b shown in FIG.9 and extending upward from the upper part of the case-cover-opposed part 70f. A cooling wind introducing hole 71 that is opposed to and overlaps with the cooling wind inlet 61 of the transmission case cover 60 is formed at the center of the case-cover-opposed part 70f.

On the right side surface of the case-cover-opposed part 70f of the inside duct member 70, a rim recess rib 72 having a recess-shaped section is formed around the cooling wind introducing hole 71 and opposed to the rim projecting rib 62 having a ring shape on the side of the transmission case cover 60 (see FIG. 5).

On the left side surface of the inside duct member 70, corresponding to the three cylindrical attaching boss parts 63 of the transmission case cover 60, cylindrical attaching boss parts 73 into which the cylindrical attaching boss parts 63 are fitted are formed to protrude toward the outside in the vehicle-width direction (left side).

The end parts of the cylindrical attaching boss parts 73 have bottom walls 73b having a ring shape.

Furthermore, on the left side surface of the inside duct member 70, a wind-guide recess rib 75 whose section has a recess shape is formed continuously from the outer circumference of the circular hole 71 of the case-cover-opposed part 70a to the upper edge part of the upward-bulging part 70b.

As depicted in FIG. 9, the wind-guide recess rib 75 runs around approximately three quarters of the outer circumference of the circular hole 71 from the upper part to the front part, the lower part, and the rear part sequentially and then extends upward, with the obliquely upper rear side of the circular hole 71 opened. Then, the wind-guide recess rib 75 bends and runs forward along the upper edge part of the upward-bulging part 70b and bends along the front edge part to extend downward.

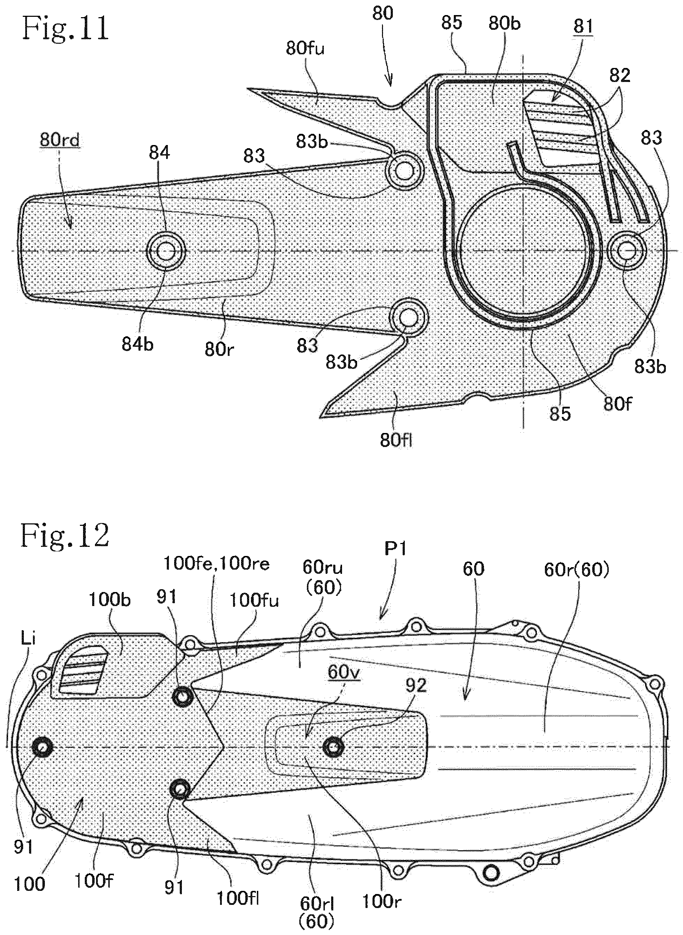

Referring to FIGS. 10 and 11, the wind-guide duct cover 80 has, on the front side thereof, a duct cover front major part 80f opposed to the case-cover-opposed part 70f of the inside duct member 70 fitted to the case cover front part 60f of the transmission case cover 60, and an external air intake part 80b opposed to the upward-bulging part 70b of the inside duct member 70. An upper edge extending part 80fu extends to the rear side of the external air intake part 80b and is opposed to the upper edge extending part 60fu of the transmission case cover 60. A lower edge extending part 80fl extends rearward from the lower part of the duct cover front major part 80f and is opposed to a lower edge extending part 60fl of the transmission case cover 60.

The wind-guide duct cover 80 has a duct cover rear part 80r extending rearward from the duct cover front major part 80f.

The duct cover rear part 80r is formed in a tapered shape gradually reduced in vertical width to be smaller toward the rear side, in order to be fitted in opposition to the fitting recess part 60v of the transmission case cover 60.

Furthermore, at the rear half part of the duct cover rear part 80r, a duct cover rear recess part 80rd is formed to be slightly hollow toward the inside in the vehicle-width direction (right side) (see FIG. 3).

The duct cover rear recess part 80rd is formed in a horizontally-elongated rectangular shape at a central region including the virtual plane Li in the duct cover rear part 80r (region that straddles the virtual plane Li in the upward-downward direction) (see FIG. 4).

The hollow of the duct cover rear recess part 80rd in this duct cover rear part 80r may be absent.

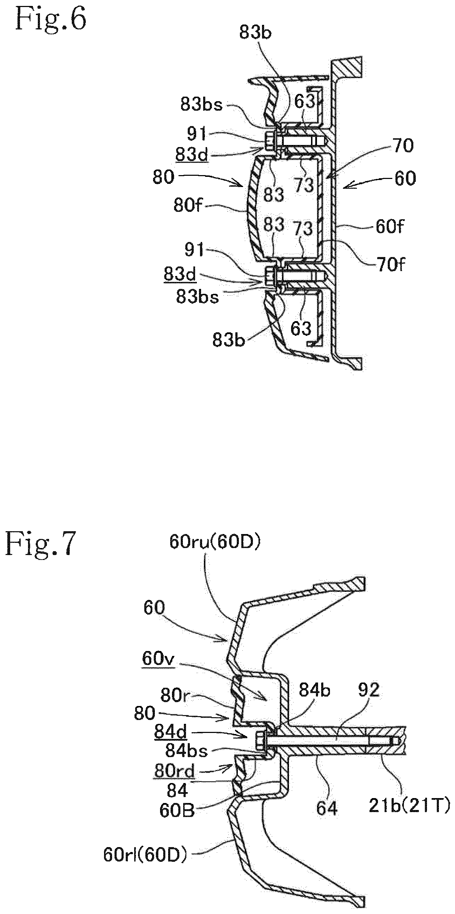

The duct cover front major part 80f of the wind-guide duct cover 80 has attaching cylindrical parts 83 (see FIG. 6) forming bolt insertion recess parts 83d. The bolt insertion recess parts 83d are each opposed to a respective one of the three cylindrical attaching boss parts 73 protruding on the left side surface of the inside duct member 70 and are depressed toward the inside in the vehicle-width direction (right side) to protrude rightward.

A ring-shaped bottom wall 83b at the end part of the protruding attaching cylindrical part 83 abuts against the ring-shaped bottom wall 73b of the opposing cylindrical attaching boss part 73.

The ring-shaped bottom wall 83b at the end part of the attaching cylindrical part 83 forms the bottom surface of the bolt insertion recess part 83d and serves as a fastening seat face 83bs of a fastening bolt 91.

Furthermore, as depicted in FIG. 7, the duct cover rear part 80r of the wind-guide duct cover 80, at its part where the duct cover rear recess part 80rd is located, is formed with a central attaching cylindrical part 84 protruding rightward and forming therein a bolt insertion recess part 84d depressed toward the inside in the vehicle-width direction (right side), to be opposed to the central cylindrical attaching boss part 64 protruding in the front recess region 60B of the transmission case cover 60.

A ring-shaped bottom wall 84b at the end part of the protruding central attaching cylindrical part 84 abuts against an end part of the opposing central cylindrical attaching boss part 64.

The ring-shaped bottom wall 84b at the end part of the central attaching cylindrical part 84 forms the bottom surface of the bolt insertion recess part 84d and serves as a fastening seat face 84bs of a fastening bolt 92.

Furthermore, on the inner surface (right side surface) of the duct cover front major part 80f and the external air intake part 80b of the wind-guide duct cover 80, a wind-guide projecting rib 85 is formed to protrude to be opposed to the wind-guide recess rib 75 formed on the left side surface of the inside duct member 70.

In the external air intake part 80b of the wind-guide duct cover 80, an external air intake 81 is opened at a position close to the front side. The external air intake 81 is provided with a louver 82 that guides external air and prevents entry of foreign matters.

The whole of the wind-guide duct cover 80 including the duct cover rear part 80r is formed of a colored synthetic resin.

To assemble the above transmission case cover 60, inside duct member 70, and wind-guide duct cover 80 to the transmission case 21T, the transmission case cover 60 is first put on the transmission case 21T with mating surfaces on their peripheries made to match each other. Then, the attaching boss parts 65 formed on the outer circumferential edge of the transmission case cover 60 are fastened to the transmission case 21T by fastening bolts 90 to attach the transmission case cover 60 to the transmission case 21T.

Referring to FIG. 5, when the transmission case cover 60 is attached to the transmission case 21T, the end surface of the central cylindrical attaching boss part 64 on the side of the transmission case cover 60 abuts against the end surface of an attaching boss part 21b, which is opposed to the central cylindrical attaching boss part 64 of the transmission case cover 60 and protrudes from the left side surface of the transmission case 21T.

A screw hole is formed in the end surface of the attaching boss part 21b.

The inside duct member 70 is overlapped with the case cover front part 60f of the transmission case cover 60 attached to the transmission case 21T in this manner.

When position alignment is carried out in such a manner that the three cylindrical attaching boss parts 63 formed to protrude in the case cover front part 60f are each fitted into the cylindrical attaching boss part 73 of the inside duct member 70 and the inside duct member 70 is overlapped with the transmission case cover 60, the rim projecting rib 62 of the transmission case cover 60 is fitted to the rim recess rib 72 of the inside duct member 70 with the intermediary of a sealing member 68, and the cooling wind inlet 61 of the transmission case cover 60 matches and communicates with the cooling wind introducing hole 71 of the inside duct member 70.

In the state in which the inside duct member 70 is overlapped with the case cover front part 60f of the transmission case cover 60 in this manner, the wind-guide duct cover 80 is put from the lateral side.

The wind-guide projecting rib 85 of the wind-guide duct cover 80 is fitted to the wind-guide recess rib 75 of the inside duct member 70 with the intermediary of a sealing member 78, and the duct cover rear part 80r of the wind-guide duct cover 80 is fitted to the fitting recess part 60v of the transmission case cover 60 to fit the wind-guide duct cover 80 to the inside duct member 70 and the transmission case cover 60.

In this state, as depicted in FIG. 5, the wind-guide duct cover 80 provided with the scattered-dot pattern in FIG. 4, has its duct cover front major part 80f and its external air intake part 80b cover, from the outside, the inside duct member 70 overlapped with the case cover front part 60f of the transmission case cover 60. Further, the upper edge extending part 80fu and the lower edge extending part 80fl of the wind-guide duct cover 80 cover the upper edge extending part 60fu and the lower edge extending part 60fl, respectively, of the transmission case cover 60. Therefore, the duct cover front major part 80f and the external air intake part 80b cover the innermost region 60A of the transmission case cover 60 from the outside, and the duct cover rear part 80r is fitted to the fitting recess part 60v of the transmission case cover 60 and covers the front recess region 60B and the rear recess region 60C.

Therefore, parts that are not covered by the wind-guide duct cover 80 in the transmission case cover 60 are the outermost region 60D including the case cover rear part 60r, the upper extending part 60ru, and the lower extending part 60rl. The outermost region 60D serves as the case cover exposed region 60D exposed to the outside.

Furthermore, the case cover rear part 60r, the upper extending part 60ru, and the lower extending part 60rl serve as the rear exposed part 60r, the upper exposed part 60ru, and the lower exposed part 60rl, respectively (see FIG. 4).

Moreover, the bottom walls 83b of the three attaching cylindrical parts 83 of the wind-guide duct cover 80 each abut against the bottom wall 73b of the cylindrical attaching boss part 73 of the inside duct member 70, and the bottom wall 84b of the central attaching cylindrical part 84 of the wind-guide duct cover 80 abuts against the end part that slightly protrudes outward in the vehicle-width direction of the central cylindrical attaching boss part 64 of the transmission case cover 60.

As depicted in FIG. 6, the fastening bolt 91 is inserted in each of the bolt insertion recess parts 83d of the three attaching cylindrical parts 83 of the wind-guide duct cover 80 from the outside in the vehicle-width direction and penetrates through the ring-shaped bottom wall 83b of the attaching cylindrical part 83 and the ring-shaped bottom wall 73b of the cylindrical attaching boss part 73 of the inside duct member 70. The fastening bolt 91 is screwed in the screw hole of the cylindrical attaching boss part 63 of the transmission case cover 60. This fastens the inside duct member 70 and the wind-guide duct cover 80 to the transmission case cover 60.

Because the bottom surface of the bolt insertion recess part 83d of the attaching cylindrical part 83 serves as the fastening seat face 83bs of the fastening bolt 91, the bolt head of the fastening bolt 91 sinks in the bolt insertion recess part 83d and comes close to the screw hole of the cylindrical attaching boss part 63 of the transmission case cover 60. Thus, a short fastening bolt can be used.

As depicted in FIG. 7, the fastening bolt 92 is inserted in the bolt insertion recess part 84d of the central attaching cylindrical part 84 formed in the duct cover rear part 80r of the wind-guide duct cover 80 from the outside in the vehicle-width direction. The fastening bolt 92 penetrates through the ring-shaped bottom wall 84b of the central attaching cylindrical part 84 and further penetrates through the central cylindrical attaching boss part 64 of the transmission case cover 60 to be screwed to the screw hole of the attaching boss part 21b of the transmission case 21T. This fastens the duct cover rear part 80r of the wind-guide duct cover 80 to the transmission case 21T together with the transmission case cover 60.

Because the bottom surface of the bolt insertion recess part 84d of the central attaching cylindrical part 84 serves as the fastening seat face 84bs of the fastening bolt 92, the head of the fastening bolt 92 sinks in the bolt insertion recess part 84d and comes close to the screw hole of the attaching boss part 21b of the transmission case 21T. Therefore, although the duct cover rear part 80r is co-fastened to the transmission case 21T together with the transmission case cover 60, a short fastening bolt can be used and the fastening can be carried out without protruding the fastening bolt outward in the vehicle-width direction.

In this manner, together with the transmission case cover 60 that internally houses and covers the belt-type continuously variable transmission T in the transmission case 21T, the wind-guide duct cover 80 is attached, with the inside duct member 70 interposed inside.

The duct cover rear part 80r of the wind-guide duct cover 80 is fitted to the fitting recess part 60v located at such a position as to straddle the virtual plane Li of the transmission case cover 60 in the upward-downward direction. Thus, the duct cover rear part 80r is positioned in such an area as to straddle the virtual plane Li in the upward-downward direction.

As stated above, the duct cover rear part 80r of the wind-guide duct cover 80 is located in such an area as to straddle the virtual plane Li in the upward-downward direction and is fitted in the fitting recess part 60v of the transmission case cover 60. Thus, the protrusion of the duct cover rear part 80r to the outside in the vehicle width-direction is suppressed (see FIG. 3 and FIG. 7).

Furthermore, the duct cover rear recess part 80rd that is recessed inward in the vehicle-width direction is formed in a region including the virtual plane Li in the duct cover rear part 80r, and the protrusion of the duct cover rear part 80r to the outside in the vehicle-width direction is further suppressed (see FIG. 3 and FIG. 7).

Referring to FIG. 4, the cooling fan 43 formed on the back surface of the fixed drive pulley half body 40a rotates due to the rotation of the crankshaft 20. External air is thereby taken in from the external air intake 81 opened in the external air intake part 80b of the wind-guide duct cover 80. The cooling wind taken in is guided in a wind-guide path formed by the fitting of the wind-guide projecting rib 85 of the wind-guide duct cover 80 and the wind-guide recess rib 75 of the inside duct member 70 and is introduced from the cooling wind introducing hole 71 and the cooling wind inlet 61 into the belt chamber 55 to cool the belt-type continuously variable transmission T in the belt chamber 55.

Referring to FIGS. 2 and 3, showing the main stand 30 provided below the power unit P in such a manner as to be capable of being freely erected and lying, when the leg parts 32 are made to lie to take the retracted state, the operation arm 33 extending leftward from the left leg part 32 extends upward in a curved shape to be close to the rear side in the anteroposterior central part of the transmission case cover 60, from the lower surface on the left side, whereby the foot-rest plate 33a on the tip reaches the vicinity of the upper edge of the transmission case cover 60.

As shown in FIG. 2, the wind-guide duct cover 80 attached to cover mainly the front part of the transmission case cover 60 from the lateral side, has its duct cover rear part 80r which extends from the duct cover front major part 80f to the rear relative to the operation arm 33 when the main stand 30 is retracted.

In the above-described embodiment of the power unit P of the motorcycle 1, the saddle-type vehicle, according to the present invention provides the advantageous effects described below.

As depicted in FIG. 2, the operation arm 33 of the main stand 30 in the retracted state extends upward in a curved shape from the lower surface of the transmission case cover 60 along its left side surface and from the leg part 32 made to lie along the lower surface of the transmission case cover 60, at a position close to the rear side of the central part of the transmission case cover 60 in the front-rear direction, so that the foot-rest plate 33a on the tip of the operation arm 33 is located at such a position as to reach the vicinity of the upper edge of the transmission case cover 60.

When the rider puts the foot on the foot-rest plate 33a located at such a position and presses down the foot-rest plate 33a to erect the main stand 30, the foot of the rider is lowered down along the outer side surface of the transmission case cover 60 and across the virtual plane Li.

As depicted in FIGS. 2 and 3, the duct cover rear part 80r of the wind-guide duct cover 80 that covers the transmission case cover 60 from the lateral side in the vehicle-width direction and is made of a synthetic resin is positioned to a rear-side position beyond the operation arm 33 when the main stand 30 is retracted. Therefore, the duct cover rear part 80r is disposed to cover the transmission case cover 60 in a region which the foot of the rider tends to hit when the rider puts the foot on the foot-rest plate 33a of the main stand 30 to erect the main stand 30. This prevents scratching of the transmission case cover made of metal at the time of erection operation of the main stand 30 and keeps the appearance of the transmission case good.

The wind-guide duct cover 80 is formed of a colored synthetic resin including the duct cover rear part 80r disposed in the region which the rider's foot tends to hit when the main stand is erected. Thus, even when the duct cover rear part 80r is scratched by the foot of the rider, the scratch marks are inconspicuous and the appearance is not impaired.

The wind-guide duct cover 80 covers mainly at least the front part of the transmission case cover 60 and the duct cover rear part 80r partly covers the transmission case cover 60 to the rear side beyond the position of the operation arm 33 of the main stand 30 at the retraction position. For this reason, the area not covered by the wind-guide duct cover 80 in the transmission case cover 60 is exposed in a comparatively-large area. Thus, the transmission case cover 60 can be efficiently cooled as a whole by heat dissipation due to the exposure of this exposed region of the transmission case cover 60 made of metal to the travel wind, and the effect of promoting cooling of the belt-type continuously variable transmission T in the belt chamber 55 by the cooling wind introduced from the cooling wind inlet 61 into the belt chamber 55 can also be kept.

As will be noted from FIGS. 2 and 3, the vicinity of the virtual plane Li including both the center axis lines of the front drive shaft (crankshaft 20) and the rear driven shaft (reducer input shaft 45) between which the belt of the belt-type continuously variable transmission T is stretched in the transmission case cover 60 is a region where the transmission case cover 60 bulges outward in the vehicle-width direction to the largest extent and thus is the region against which the rider's foot tends to hit. By disposing the duct cover rear part 80r in such a region as to straddle this virtual plane Li in the upward-downward direction, the rider's foot is prevented at most from hitting the exposed transmission case cover 60, and scratching of the painted surface of the transmission case cover 60 made of metal can be suppressed.

As depicted in FIG. 3, the duct cover rear part 80r, located in such a region as to straddle the virtual plane Li of the wind-guide duct cover 80 in the upward-downward direction, is fitted in the fitting recess part 60v of the transmission case cover 60. Because of this, the outward protrusion to the duct cover rear part 80r in the vehicle-width direction is suppressed and thus the contact of the rider's foot on the duct cover rear part 80r is prevented.

Moreover, the duct cover rear recess part 80rd is formed by inwardly recessing the region including the virtual plane Li in the duct cover rear part 80r, so that contact of the rider's foot can be further suppressed (see FIG. 3).

As shown in FIG. 2, the duct cover rear part 80r of the wind-guide duct cover 80 is located in the center between the upper edge and lower edge of the transmission case cover 60 in side view, and the case cover exposed region 60D, which is not covered by the wind-guide duct cover 80 and is exposed to the outside in the transmission case cover 60, includes the rear exposed part 60r on the rear side relative to the duct cover rear part 80r and the upper and lower exposed parts 60ru and 60rl formed to extend forward from the rear exposed part 80r on the upper and lower sides of the duct cover rear part 80r. Therefore, a large surface area can be provided as the surface area of the case cover exposed region 60D that is not covered by the wind-guide duct cover 80. Thus, heat dissipation of the transmission case cover 60 by the vehicle travel wind can be efficiently carried out and an increased cooling effect on the belt-type continuously variable transmission T can be expected.

As depicted in FIG. 5, the duct cover rear part 80r of the wind-guide duct cover 80 is co-fastened to the transmission case 21T together with the transmission case cover 60 by the fastening bolt 92. Thus, the duct cover rear part 80r can be fixed stably and surely even if it is elongated in the front-rear direction. In addition, the number of parts can be reduced because the wind-guide duct cover 80 is co-fastened by the fastening bolt 92 that fastens the transmission case cover 60 to the transmission case 21T.

As also depicted in FIG. 5, the fastening seat face 84bs, against which the fastening bolt 92 is fastened to fix the duct cover rear part 80r of the wind-guide duct cover 80, is formed at the bottom surface of the bolt insertion recess part 84d, which is depressed inward in the vehicle width-direction to the bottom surface of the fitting recess part 60v of the transmission case cover 60, and is formed in the duct cover rear part 80r. Thus, even when the duct cover rear part 80r is co-fastened to the transmission case 21T together with the transmission case cover 60, the co-fastening can be carried out by using the fastening bolt 92 of short length without protruding the fastening bolt 92 outward in the vehicle-width direction.

The wind-guide duct cover 80 is formed with the duct cover rear part 80r extending to the rear side from the duct cover front major part 80f covering the front part of the transmission case cover 60. Thus, the duct cover front major part 80f and the duct cover rear part 80r are formed integrally and continuously in the wind-guide duct cover 80. Thus, the number of parts is reduced and assembling work and so forth are made easy.

Furthermore, by co-fastening the duct cover rear part 80r to the transmission case 21T together with the transmission case cover 60, the wind-guide duct cover 80 can be securely attached to the transmission case by a small number of fastening bolts.

In the above described first embodiment, the wind-guide duct cover 80 made of synthetic resin is made by integrally forming the duct cover front major part 80f and the duct cover rear part 80r. A second embodiment will be described below, in which a duct cover rear part is divided from a duct cover front major part and is formed as a separate body.

In a power unit of a saddle-type vehicle according to the second embodiment, the components other than the wind-guide duct cover are the same as the power unit P according to the first embodiment and therefore the same numerals are also used.

A left side view of a power unit P1 of a first example of the second embodiment is depicted in FIG. 12.

A wind-guide duct cover 100 is made of a colored synthetic resin. A duct cover front major part 100f and a duct cover rear part 100r are formed of separate bodies and their dividing end surfaces 100fe and 100re abut against each other.

An external air intake part 100b, an upper edge extending part 100fu, and a lower edge extending part 100fr are formed in the duct cover front major part 100f. As will be noted from FIG. 12, the shape formed by consecutively joining the duct cover front major part 100f and the duct cover rear part 100r is the same as the shape of the wind-guide duct cover 80 of the above-described first embodiment.

The dividing end surfaces 100fe and 100re of the duct cover front major part 100f and the duct cover rear part 100r are shaped to mutually form an angle and extend rearward from upper and lower intersections at which the upper and lower edges of the duct cover rear part 100r intersect the duct cover front major part 100f.

The duct cover front major part 100f is fastened to the transmission case cover 60 by three fastening bolts 91. The duct cover rear part 100r is fitted to the fitting recess part 60v of the transmission case cover 60 and is fastened to the transmission case 21T together with the transmission case cover 60 through co-fastening by the fastening bolt 92.

Therefore, with this power unit P1, damaging the painted surface of the transmission case cover 60 by the rider's foot when the main stand is erected, is prevented as much as possible similarly to the first embodiment. In addition, the duct cover front major part 100f can be removed without removing the fastening bolt 92 with which co-fastening is carried out. Thus, maintainability in carrying out maintenance or the like is improved.

Furthermore, a wide variety of appearance can be formed by changing the shape of the dividing end surfaces 100fe and 100re without changing the shape of the whole wind-guide duct cover 100.

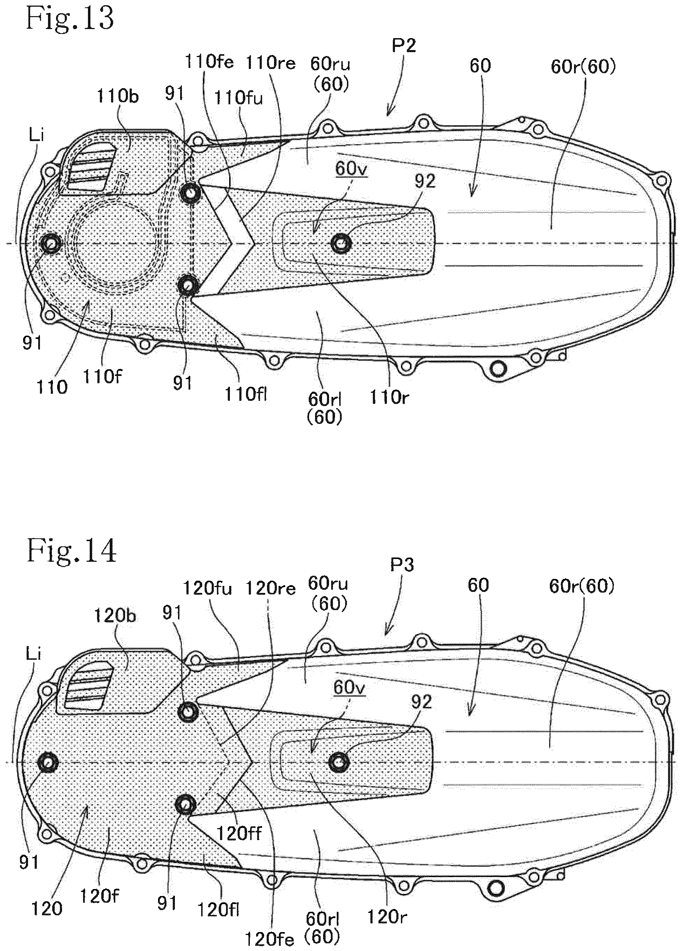

Next, a second example of the wind-guide duct cover in the second embodiment will be described with reference to FIG. 13.

A wind-guide duct cover 110 of a power unit P2 of this second example is made of a colored synthetic resin. A duct cover rear part 110r is disposed to be away rearward and be separated from a duct cover front major part 110f.

Specifically, the duct cover front major part 110f is integrally formed with an external air intake part 110b, an upper edge extending part 110fu, and a lower edge extending part 110fr, which have the same shapes as the duct cover front major part 100f, the external air intake part 100b, the upper edge extending part 100fu, and the lower edge extending part 100fr in the first example. However, the duct cover rear part 110r has a shape resulting from the rearward displacement of the dividing end surface 100re of the duct cover rear part 100r of the first example.

Therefore, the duct cover front major part 110f and the duct cover rear part 110r are disposed in such a manner that the dividing end surface 110re forming an angle in a recessed shape in the duct cover rear part 110r is separated rearward from the dividing end surface 110fe forming an angle in a protruding shape in the duct cover front major part 110f.

As will be noted from FIG. 13, a characteristic appearance is thus provided in which the transmission case cover 60 is exposed and visible between the dividing end surfaces 110fe and 110re separated from each other.

The transmission case cover 60 may be formed to partly bulge into the space between the mutually separated dividing end surfaces 110fe and 110re of the duct cover front major part 110f and the duct cover rear part 110r, and the bulging surface of the transmission case cover 60 may form the same surface as the duct cover front major part 110f and the duct cover rear part 110r.

Because the transmission case cover 60 is exposed to the outside between the mutually separated dividing end surfaces 110fe and 110re of the duct cover front major part 110f and the duct cover rear part 110r, the exposed area of the transmission case cover 60 made of metal increases. Thus, heat dissipation from the transmission case cover 60 by the vehicle travel wind is promoted, and an increased cooling effect for the belt-type continuously variable transmission T can be expected.

The duct cover rear part 110r is disposed to a rearward position beyond the operation arm 33 when the main stand 30 is retracted. Thus, scratching of the painted surface of the transmission case cover 60 accompanying main stand erection operation can be suppressed by this duct cover rear part 110r.

Furthermore, the duct cover front major part 110f is fastened to the transmission case cover 60 by three fastening bolts 91. The duct cover rear part 110r is fitted in the fitting recess part 60v of the transmission case cover 60 and is fastened to the transmission case 21T together with the transmission case cover 60 through co-fastening by the fastening bolt 92. Thus, the duct cover front major part 100f can be removed without removing the fastening bolt 92 with which the co-fastening is made. Thus, maintainability in carrying out maintenance or the like is improved.

Next, a third example of the wind-guide duct cover in the second embodiment will be described with reference to FIG. 14.

A wind-guide duct cover 120 of a power unit P3 of the third example is made of a colored synthetic resin. A duct cover front major part 120f and a duct cover rear part 120r are formed of separate bodies but are disposed to partly overlap.

The duct cover rear part 120r has substantially the same shape as the duct cover rear part 120r of the first example depicted in FIG. 12. However, in the duct cover front major part 120f, an extending part 120ff extends rearward to provide a dividing end surface 120fe forming an angle in a rearwardly protruding manner, and the rear end surface of the extending part 120ff is the dividing end surface 120fe.

The duct cover rear part 120r is fitted in the fitting recess part 60v of the transmission case cover 60 and is fastened to the transmission case 21T together with the transmission case cover 60 through co-fastening by the fastening bolt 92. Thereafter, the duct cover front major part 120f is fastened to the transmission case cover 60 by three fastening bolts 91, with the rearwardly extending part 120ff overlapped with the front end part of the duct cover rear part 120r from the outside in the vehicle-width direction.

The duct cover front major part 100f can thus be removed without removing the fastening bolt 92 with which the co-fastening is made, and maintainability in carrying out maintenance or the like is improved.

The duct cover rear part 110r is disposed to cover the transmission case cover 60 to extend to the rear beyond the operation arm 33 when the main stand 30 is retracted. Thus, scratching of the painted surface of the transmission case cover 60 accompanying main stand erection operation can be suppressed by this duct cover rear part 110r.

The power units of the saddle-type vehicle according to the embodiments of the present invention have been described above. However, aspects of the present invention are not limited to the above-described embodiments.

Furthermore, the dividing end surfaces are formed to form an angle in the second and third examples. However, the dividing end surfaces are not limited thereto and various shapes can be employed.

It is preferable to have the front end shape of the duct cover rear part configured along the rear end shape of the duct cover front major part as the shape of the dividing end surfaces. By employing such a shape, a configuration is provided in which the duct cover front major part and the duct cover rear part afford a feeling of unity, and the total appearance can be improved.

### [Reference Signs List]

P··· Power unit, E··· Internal combustion engine, T··· V-belt-type continuously variable transmission, Tr··· Reduction gear mechanism, Li···Virtual plane,
1··· Motorcycle, 20··· Crankshaft (front drive shaft), 21R··· Right crankcase, 21T··· Transmission case, 21c··· Crankcase,
30··· Main stand, 32··· Leg part, 33··· Operation arm,
40··· Drive pulley, 43··· Cooling fan, 44··· V-belt, 45··· Reducer input shaft (rear driven shaft), 47··· Driven pulley, 55··· Belt chamber,
60··· Transmission case cover, 60f··· Case cover front part, 60c··· Case cover central part, 60r··· Case cover rear part (rear exposed part), 60ru··· Upper extending part (upper exposed part), 60rl··· Lower extending part (lower exposed part), 60v··· Fitting recess part, 60A··· Innermost region, 60B··· Front recess region, 60C··· Rear recess region, 60D··· Outermost region (case cover exposed region), 61··· Cooling wind inlet, 63··· Cylindrical attaching boss part, 64··· Central cylindrical attaching boss part,
70··· Inside duct member, 70f··· Case-cover-opposed part, 70b··· Upward-bulging part, 71··· Cooling wind introducing hole, 73··· Cylindrical attaching boss part,
80··· Wind-guide duct cover, 80f··· Duct cover front major part, 80b··· External air intake part, 80r··· Duct cover rear part, 81··· External air intake, 83··· Attaching cylindrical part, 83d··· Bolt insertion recess part, 84··· Central attaching cylindrical part, 84d··· Bolt insertion recess part, 84bs··· Fastening seat face,
90, 91, 92··· Fastening bolt,
P1··· Power unit, 100··· Wind-guide duct cover, 100f···Duct cover front major part, 100fe··· Dividing end surface, 100r··· Duct cover rear part, 100re··· Dividing end surface,
P2··· Power unit, 110··· Wind-guide duct cover, 110f··· Duct cover front major part, 110fe··· Dividing end surface, 110r··· Duct cover rear part, 110re··· Dividing end surface,
P3··· Power unit, 120··· Wind-guide duct cover, 120f··· Duct cover front major part, 120fe··· Dividing end surface, 120r··· Duct cover rear part, 120re··· Dividing end surface.

## Claims

1. A power unit of a saddle-type vehicle, including an internal combustion engine (E) and a belt-type continuously variable transmission (T) integrally configured and mounted on a saddle-type vehicle, the power unit (P) comprising:
a transmission case (21T) joined to a crankcase (21c) bearing a crankshaft (20), extending in a vehicle-width direction, of the internal combustion engine (E), the transmission case (21T) extending to a lateral side of a rear wheel of the vehicle;
a transmission case cover (60) made of a metal and covering a lateral side of the transmission case (21T), with respect to the vehicle-width direction, to cooperate with the transmission case (21T) to define a belt chamber (55);
a main stand (30) pivotally supported by a lower part of the crankcase (21c) and swingable between an erection position at which the main stand (30) erects to support the vehicle and a retraction position at which the main stand (30) is made to lie along a lower surface of the transmission case (21T),
the main stand (30) having an operation part (33) extending transversely to the main stand (30) and being adapted to be positioned on an outer lateral side of the transmission case cover (60) with respect to the vehicle-width direction when the main stand (30) is located at the retraction position; and
a wind-guide duct cover (80) that has a duct cover rear part (80r) in a rear side thereof, the duct cover rear part (80r) extending rearward beyond a position of the operation part (33) taken when the main stand (30) is retracted;
wherein at least a part of the transmission case cover (60) is exposed to outside in side view;
**characterised in that**:
the transmission case cover (60) has an open cooling wind inlet (61) formed at a front part thereof to introduce a cooling wind into the belt chamber (55); and
the wind-guide duct cover (80) covers at least a front part including the cooling wind inlet (61) of the transmission case cover (60) from the lateral side with respect to the vehicle-width direction, in a manner to introduce external air into the cooling wind inlet.

2. The power unit of a saddle-type vehicle according to claim 1, wherein:
the wind-guide duct cover (80) including the duct cover rear part (80r) is totally formed of a colored resin.

3. The power unit of a saddle-type vehicle according to claim 1 or 2, wherein:
the duct cover rear part (80r) is disposed in such an area as to straddle, in an upward-downward direction, a virtual plane (Li) including both center axis lines of the crankshaft (20), as a front drive shaft, and a rear driven shaft (45) between which a belt of the belt-type continuously variable transmission (T) is stretched.

4. The power unit of a saddle-type vehicle according to claim 3, wherein:
the duct cover rear part (80r) is located in an intermediate area between an upper edge and a lower edge of the transmission case cover (60) in side view; and
the transmission case cover (60) has a case cover exposed region (60D) uncovered by the wind-guide duct cover (80) to be exposed to outside, and the case cover exposed region (60D) includes a rear exposed part (60r) on the rear side relative to the duct cover rear part (80r), and upper and lower exposed parts (60ru,60rl) formed to extend forward from the rear exposed part (60r) along upper and lower sides of the duct cover rear part.

5. The power unit of a saddle-type vehicle according to claim 4, wherein:
the transmission case cover (60) has a fitting recess part (60v) recessed inward in the vehicle-width direction to receive therein the duct cover rear part (80r) .

6. The power unit of a saddle-type vehicle according to any one of claims 3 to 5, wherein:
the duct cover rear part (80r) has a duct cover rear recess part (80rd) recessed inward in the vehicle-width direction in a region including the virtual plane (Li) .

7. The power unit of a saddle-type vehicle according to any one of claims 3 to 6, wherein:
the duct cover rear part (80r) is co-fastened to the transmission case (21T) together with the transmission case cover (60) by a fastening bolt (92) for fastening the transmission case cover (60) to the transmission case (21T).

8. The power unit of a saddle-type vehicle according to claim 7, wherein:
the transmission case cover (60) is formed with a fitting recess part (60v) recessed inward in the vehicle-width direction to receive therein the duct cover rear part (80r); and
the duct cover rear part (80r) has a fastening seat face (84bs) against which the fastening bolt (92) is tightened, and the fastening seat face (84bs) is formed on a bottom surface of a bolt insertion recess part (84d) of the duct cover rear part (80r), formed to be depressed inward in the vehicle-width direction onto a bottom surface of the fitting recess part (60v) of the transmission case cover (60).

9. The power unit of a saddle-type vehicle according to any one of claims 1 to 8, wherein:
the wind-guide duct cover (80) has a duct cover front major part (80f) covering the front part of the transmission case cover (60), the duct cover rear part (80r) being formed to extend to the rear from the duct cover front major part (80f).

10. The power unit of a saddle-type vehicle according to any one of claims 1 to 8, wherein;
the wind-guide duct cover (80) includes a duct cover front major part (80f) covering the front part of the transmission case cover (60), and the duct cover rear part (80r) is separate from, and is disposed on the rear of the duct cover front major part (80f).

## Patentansprüche

1. Antriebseinheit eines Fahrzeugs vom Satteltyp, beinhaltend einen Verbrennungsmotor (E) und ein stufenloses Automatikgetriebe (T) vom Riementyp, das integral eingerichtet und an einem Fahrzeug vom Satteltyp montiert ist, wobei die Antriebseinheit (P) umfasst:
ein Getriebegehäuse (21T), das an ein Kurbelgehäuse (21c) des Verbrennungsmotors (E) gefügt ist, welches eine Kurbelwelle (20) lagert, die sich in einer Fahrzeugbreitenrichtung erstreckt, wobei das Getriebegehäuse (21T) sich zu einer seitlichen Seite eines Hinterrads des Fahrzeugs erstreckt;
eine Getriebegehäuseabdeckung (60), die aus Metall gefertigt ist und eine seitliche Seite des Getriebegehäuses (21T) in Bezug auf eine Fahrzeugbreitenrichtung abdeckt, um mit dem Getriebegehäuse (21T) zusammenzuwirken, um eine Riemenkammer (55) zu definieren;
ein Hauptständer (30), der schwenkbar an einem unteren Teil des Kurbelgehäuses (21c) abgestützt und zwischen einer aufrechten Position, in welcher der Hauptständer (30) aufgerichtet ist, um das Fahrzeug zu stützen, und einer eingezogenen Position, in welcher der Hauptständer (30) entlang einer unteren Oberfläche des Getriebegehäuses (21T) angelegt wird, schwingbar ist,
wobei der Hauptständer (30) einen Betätigungsteil (33) aufweist, der sich quer zu dem Hauptständer (30) erstreckt und angepasst ist, um auf einer äußeren seitlichen Seite der Getriebegehäuseabdeckung (60) in Bezug auf die Fahrzeugbreitenrichtung positioniert zu sein, wenn der Hauptständer (30) sich in der eingezogenen Position befindet; und
eine Windführungskanalabdeckung (80), die einen Kanalabdeckungshinterteil (80r) in einer hinteren Seite derselben aufweist, wobei der Kanalabdeckungshinterteil (80r) sich hach hintern über eine Position des Betätigungsteils (33) hinaus erstreckt, wenn der Hauptständer (30) eingezogen ist;
wobei mindestens ein Teil der Getriebegehäuseabdeckung (60) in einer Seitenansicht nach außen freigelegt ist;
**dadurch gekennzeichnet, dass**:
die Getriebegehäuseabdeckung (60) einen offenen Kühlwindeinlass (61) aufweist, der an einem Vorderteil derselben gebildet ist, um einen Kühlwind in die Riemenkammer (55) hinein einzuführen; und
die Windführungskanalabdeckung (80) mindestens einen Vorderteil, der den Kühlwindeinlass (61) der Getriebegehäuseabdeckung (60) beinhaltet, von der seitlichen Seite in Bezug auf die Fahrzeugbreitenrichtung auf eine Weise abdeckt, dass externe Luft in den Kühlwindeinlass hinein eingeführt wird.

2. Antriebseinheit eines Fahrzeugs vom Satteltyp nach Anspruch 1, wobei:
die den Kanalabdeckungshinterteil (80r) beinhaltende Windführungskanalabdeckung (80) vollständig aus gefärbtem Harz gebildet ist.

3. Antriebseinheit eines Fahrzeugs vom Satteltyp nach Anspruch 1 oder 2, wobei:
der Kanalabdeckungshinterteil (80r) ein einer solchen Gegend angeordnet ist, dass er in einer oben-unten-Richtung eine virtuelle Ebene (Li) aufspannt, die beide Mittelachsenlinien der Kurbelwelle (20) als einer vorderen Antriebswelle und einer hinteren angetriebenen Welle (45) beinhaltet, zwischen denen ein Riemen des stufenlosen Automatikgetriebes (T) vom Riementyp gespannt ist.

4. Antriebseinheit eines Fahrzeugs vom Satteltyp nach Anspruch 3, wobei:
der Kanalabdeckungshinterteil (80r) sich in einer Seitenansicht in einer Zwischengegend zwischen einer oberen Kante und einer unteren Kante der Getriebegehäuseabdeckung (60) befindet; und
die Getriebegehäuseabdeckung (60) einen freigelegten Bereich (60D) der Gehäuseabdeckung aufweist, der von der Windführungskanalabdeckung (80) unbedeckt ist, um nach außen freigelegt zu sein, und der freigelegte Bereich (60D) der Gehäuseabdeckung einen hinteren freigelegten Teil (60r) auf der hinteren Seite relativ zu dem Kanalabdeckungshinterteil (80r) und obere und untere freigelegte Teile (60ru, 60rl), die gebildet sind, um sich von dem hinteren freigelegten Teil (60r) entlang oberer und unterer Seiten des Kanalabdeckungshinterteils nach vorn zu erstrecken, beinhaltet.

5. Antriebseinheit eines Fahrzeugs vom Satteltyp nach Anspruch 4, wobei:
die Getriebegehäuseabdeckung (60) einen Passungsaussparungsteil (60v) aufweist, der in der Fahrzeugbreitenrichtung nach innen ausgespart ist, um darin den Kanalabdeckungshinterteil (80r) aufzunehmen.

6. Antriebseinheit eines Fahrzeugs vom Satteltyp nach einem der Ansprüche 3 bis 5, wobei:
der Kanalabdeckungshinterteil (80r) einen Kanalabdeckungshinteraussparungsteil (80rd), der in der Fahrzeugbreitenrichtung nach innen ausgespart ist, in einem Bereich aufweist, der die virtuelle Ebene (Li) beinhaltet.

7. Antriebseinheit eines Fahrzeugs vom Satteltyp nach einem der Ansprüche 3 bis 6, wobei:
der Kanalabdeckungshinterteil (80r) an dem Getriebegehäuse (21T) zusammen mit der Getriebegehäuseabdeckung (60) durch einen Befestigungsbolzen (92) zur Befestigung der Getriebegehäuseabdeckung (60) an dem Getriebegehäuse (21T) mitbefestigt ist.

8. Antriebseinheit eines Fahrzeugs vom Satteltyp nach Anspruch 7, wobei:
die Getriebegehäuseabdeckung (60) mit einem Passungsaussparungsteil (60v) ausgebildet ist, der in der Fahrzeugbreitenrichtung nach innen ausgespart ist, um darin den Kanalabdeckungshinterteil (80r) aufzunehmen; und
der Kanalabdeckungshinterteil (80r) eine Befestigungssitzfläche (84bs) aufweist, gegen welche der Befestigungsbolzen (92) festgezogen wird, und die Befestigungssitzfläche (84bs) auf einer unteren Oberfläche eines Bolzeneinsetzaussparungsteils (84d) des Kanalabdeckungshinterteils (80r) gebildet ist, der ausgebildet ist, um in der Fahrzeugbreitenrichtung nach innen auf eine untere Oberfläche des Passungsaussparungsteils (60v) der Getriebegehäuseabdeckung (60) aufgedrückt zu werden.

9. Antriebseinheit eines Fahrzeugs vom Satteltyp nach einem der Ansprüche 1 bis 8, wobei:
die Windführungskanalabdeckung (80) einen Kanalabdeckungsvorderhauptteil (80f) aufweist, der den Vorderteil der Getriebegehäuseabdeckung (60) abdeckt, wobei der Kanalabdeckungshinterteil (80r) ausgebildet ist, um sich von dem Kanalabdeckungsvorderhauptteil (80f) her nach hinten zu erstrecken.

10. Antriebseinheit eines Fahrzeugs vom Satteltyp nach einem der Ansprüche 1 bis 8, wobei:
die Windführungskanalabdeckung (80) einen Kanalabdeckungsvorderhauptteil (80f) aufweist, der den Vorderteil der Getriebegehäuseabdeckung (60) abdeckt, und der Kanalabdeckungshinterteil (80r) separat von und hinterhalb des Kanalabdeckungsvorderhauptteils (80f) angeordnet ist.

## Revendications

1. Unité motrice d'un véhicule du type à enfourcher, incluant un moteur à combustion interne (E) et une transmission à variation continue à courroie (T) intégralement configurée et montée sur un véhicule du type à enfourcher, l'unité motrice (P) comprenant :
un boîtier de transmission (21T) raccordé à un carter moteur (21c) portant un vilebrequin (20), s'étendant dans un sens de largeur de véhicule, du moteur à combustion interne (E), le boîtier de transmission (21T) s'étendant jusqu'à un côté latéral d'une roue arrière du véhicule ;
un couvercle de boîtier de transmission (60) constitué d'un métal et recouvrant un côté latéral du boîtier de transmission (21T), par rapport au sens de largeur de véhicule, pour coopérer avec le boîtier de transmission (21T) afin de définir une chambre à courroie (55) ;
une béquille principale (30) supportée, de manière à pouvoir pivoter, par une partie inférieure du carter moteur (21c) et pouvant basculer entre une position déployée à laquelle la béquille principale (30) se déploie pour supporter le véhicule et une position rétractée à laquelle la béquille principale (30) est amenée à reposer le long d'une surface inférieure du boîtier de transmission (21T),
la béquille principale (30) ayant une partie opérationnelle (33) s'étendant transversalement à la béquille principale (30) et étant apte à être positionnée sur un côté latéral extérieur du couvercle de boîtier de transmission (60) par rapport au sens de largeur de véhicule lorsque la béquille principale (30) est située à la position rétractée ; et
un couvercle de conduit de guidage de vent (80) ayant une partie arrière de couvercle de conduit (80r) dans un côté arrière de celui-ci, la partie arrière de couvercle de conduit (80r) s'étendant vers l'arrière au-delà d'une position de la partie opérationnelle (33) prise lorsque la béquille principale (30) est rétractée ;
dans laquelle au moins une partie du couvercle de boîtier de transmission (60) est exposée à l'extérieur en vue latérale ;
**caractérisée en ce que** :
le couvercle de boîtier de transmission (60) a une entrée de vent de refroidissement ouverte (61) formée à une partie avant de celui-ci pour introduire un vent de refroidissement dans la chambre à courroie (55) ; et
le couvercle de conduit de guidage de vent (80) recouvre au moins une partie avant incluant l'entrée de vent de refroidissement (61) du couvercle de boîtier de transmission (60) depuis le côté latéral par rapport au sens de largeur de véhicule, de manière à introduire un air externe dans l'entrée de vent de refroidissement.

2. Unité motrice d'un véhicule du type à enfourcher selon la revendication 1, dans laquelle :
le couvercle de conduit de guidage de vent (80) incluant la partie arrière de couvercle de conduit (80r) est complètement formé d'une résine colorée.

3. Unité motrice d'un véhicule du type à enfourcher selon la revendication 1 ou 2, dans laquelle :
la partie arrière de couvercle de conduit (80r) est disposée dans une zone de manière à enjamber, dans un sens vers le haut-vers le bas, un plan virtuel (Li) incluant les deux lignes d'axe central du vilebrequin (20), en tant qu'un arbre d'entraînement avant et un arbre entraîné arrière (45), entre lesquels une courroie de la transmission à variation continue à courroie (T) est étendue.

4. Unité motrice d'un véhicule du type à enfourcher selon la revendication 3, dans laquelle :
la partie arrière de couvercle de conduit (80r) est située dans une zone intermédiaire entre un bord supérieur et un bord inférieur du couvercle de boîtier de transmission (60) en vue latérale ; et
le couvercle de boîtier de transmission (60) a une région exposée de couvercle de boîtier (60D) découverte par le couvercle de conduit de guidage de vent (80) pour être exposée à l'extérieur, et la région exposée de couvercle de boîtier (60D) inclut une partie exposée arrière (60r) sur le côté arrière par rapport à la partie arrière de couvercle de conduit (80r), et des parties exposées supérieure et inférieure (60ru, 60rl) formées pour s'étendre vers l'avant depuis la partie exposée arrière (60r) le long de côtés supérieur et inférieur de la partie arrière de couvercle de conduit.

5. Unité motrice d'un véhicule du type à enfourcher selon la revendication 4, dans laquelle :
le couvercle de boîtier de transmission (60) a une partie d'évidement d'ajustement (60v) évidée vers l'intérieur dans le sens de largeur de véhicule pour recevoir la partie arrière de couvercle de conduit (80r) à l'intérieur de celle-ci.

6. Unité motrice d'un véhicule du type à enfourcher selon l'une quelconque des revendications 3 à 5, dans laquelle :
la partie arrière de couvercle de conduit (80r) a une partie d'évidement arrière de couvercle de conduit (80rd) évidée vers l'intérieur dans le sens de largeur de véhicule dans une région incluant le plan virtuel (Li).

7. Unité motrice d'un véhicule du type à enfourcher selon l'une quelconque des revendications 3 à 6, dans laquelle :
la partie arrière de couvercle de conduit (80r) est attachée en commun au boîtier de transmission (21T) solidairement avec le couvercle de boîtier de transmission (60) par un boulon d'attachement (92) pour attacher le couvercle de boîtier de transmission (60) au boîtier de transmission (21T).

8. Unité motrice d'un véhicule du type à enfourcher selon la revendication 7, dans laquelle :
le couvercle de boîtier de transmission (60) est formé avec une partie d'évidement d'ajustement (60v) évidée vers l'intérieur dans le sens de largeur de véhicule pour recevoir la partie arrière de couvercle de conduit (80r) à l'intérieur de celle-ci ; et
la partie arrière de couvercle de conduit (80r) a une face de siège d'attachement (84bs) contre laquelle le boulon d'attachement (92) est serré, et la face de siège d'attachement (84bs) est formée sur une surface de fond d'une partie d'évidement d'insertion de boulon (84d) de la partie arrière de couvercle de conduit (80r), formée pour être enfoncée vers l'intérieur dans le sens de largeur de véhicule sur une surface de fond de la partie d'évidement d'ajustement (60v) du couvercle de boîtier de transmission (60).

9. Unité motrice d'un véhicule du type à enfourcher selon l'une quelconque des revendications 1 à 8, dans laquelle :
le couvercle de conduit de guidage de vent (80) a une partie majeure avant de couvercle de conduit (80f) recouvrant la partie avant du couvercle de boîtier de transmission (60), la partie arrière de couvercle de conduit (80r) étant formée pour s'étendre vers l'arrière depuis la partie majeure avant de couvercle de conduit (80f).

10. Unité motrice d'un véhicule du type à enfourcher selon l'une quelconque des revendications 1 à 8, dans laquelle :
le couvercle de conduit de guidage de vent (80) inclut une partie majeure avant de couvercle de conduit (80f) recouvrant la partie avant du couvercle de boîtier de transmission (60), et la partie arrière de couvercle de conduit (80r) est distincte de et est disposée sur l'arrière de la partie majeure avant de couvercle de conduit (80f).
